# EUROPÄISCHE PATENTSCHRIFT

(11) **EP 4 480 758 B1**
(45) Veröffentlichungstag und Bekanntmachung des Hinweises auf die Patenterteilung: **04.02.2026**
(21) Anmeldenummer: 24183159.3
(22) Anmeldetag: 19.06.2024
(51) Int. Cl.: B60R 13/04

(54) **LADEKANTENABDECKUNG FÜR EINEN PKW-KOFFERRAUM**
LOADING EDGE COVER FOR A PASSENGER VEHICLE LUGGAGE COMPARTMENT
COUVERCLE DE BORD DE CHARGEMENT POUR COFFRE DE VOITURE AUTOMOBILE

(30) Priorität: 21.06.2023 DE 202023103420 U
(43) Veröffentlichungstag der Anmeldung: 25.12.2024
(73) Patentinhaber: Köhler Automobiltechnik GmbH, 59558 Lippstadt (DE)
(72) Erfinder: Neuhaus, Uwe, 59590 Geseke (DE); Börnemeier, Christian, 33106 Paderborn (DE)
(74) Vertreter: Ter Meer Steinmeister & Partner

(56) Entgegenhaltungen:
- DE-A1- 102006 045 493
- JP-B2- 4 393 672
- US-A- 4 547 994
- US-A- 4 682 442

## Beschreibung

Die Erfindung betrifft ein Verfahren zur Herstellung einer Ladekantenabdeckung für einen Pkw-Kofferraum, in der Form einer reliefartig geprägten Platte aus Edelstahlblech, die an ihrer Oberfläche zumindest auf einer Seite eine Lackschicht mit einheitlicher Dicke aufweist.

Bei dem Kofferraum eines Pkw weist die Ladekante üblicherweise eine Abdeckung auf, die durch eine oder mehrere Platten aus Edelstahlblech gebildet wird, die sich im wesentlichen über die gesamte Breite des Kofferraums erstrecken. Durch eine reliefartige Prägung des Edelstahlbleches werden konvexe Strukturen geschaffen, die ähnlich wie Gleitkufen den Reibungswiderstand mindern, falls beim Beladen des Fahrzeugs schwere Gegenstände über die Ladekante geschoben werden. Häufig wird die oberseitige Oberfläche des Edelstahlbleches durch Bürsten oder in sonstiger Weise mechanisch bearbeitet, um eine genarbte oder aufgeraute Oberflächenstruktur zu erreichen. Eine solche Ladekantenabdeckung ist beispielsweise aus DE 10 2006 045493 A1 bekannt.

Aufgabe der Erfindung ist es, ein Verfahren zur Herstellung einer Ladekantenabdeckung anzugeben, die ein verbessertes optisches Erscheinungsbild bietet und eine erhöhte Kratzfestigkeit aufweist.

Diese Aufgabe wird erfindungsgemäß durch ein Verfahren mit den folgenden Schritten gelöst:
- abziehen einer endlosen Bahn eines Edelstahlbleches von einem Coil,
- lackieren der Materialbahn,
- aushärten lassen des Lackes,
- auflaminieren einer Schutzfolie auf die lackierte Seite des Edelstahlbleches,
- stanzen und prägen des Edelstahlbleches mit der auflaminierten Schutzfolie zur Bildung einzelner Ladekantenabdeckungen,
- abziehen der Schutzfolie.

Da die Lackschicht eine größere Härte aufweist als das Edelstahlblech, wird eine erhöhte Kratzfestigkeit erreicht. Außerdem sind Fingerabdrücke auf der Oberfläche des Lackes weniger sichtbar als auf den Metalloberfläche herkömmlicher Abdeckungen. Zugleich wird durch die Lackschicht eine farbliche Anpassung der Abdeckung an die übrige Innenauskleidung des Kofferraums ermöglicht. Falls doch einmal ein Kratzer auf der Oberfläche entsteht, wird die Tiefe dieses Kratzers generell geringer sein als die Dicke der Lackschicht, so dass anders als beispielsweise bei eloxierten Oberflächen das helle Metall verdeckt bleibt und der Kratzer optisch nicht auffällt. Da die Lackschicht eine einheitliche Dicke aufweist, treten an den Rändern der reliefartigen Strukturen keine Unregelmäßigkeiten auf.

Wahlweise kann zum Lackieren ein Strukturlack verwendet werden, der beim Aushärten eine reliefartige Oberflächenstruktur erzeugt, die einer gebürsteten Edelstahloberfläche ähnelt.

Im folgenden wird ein Ausführungsbeispiel einer erfindungsgemäßen Ladekantenabdeckung und eines Verfahrens zu ihrer Herstellung anhand der Zeichnungen näher erläutert.

Es zeigen:
- Fig. 1: eine Ansicht einer Ladekantenabdeckung;
- Fig. 2: einen Schnitt längs der Linie II-II in Fig. 1;
- Fig. 3: eine Skizze zur Illustration einiger Stufen eines Herstellungsverfahrens für die Ladekantenabdeckung;
- Fig. 4: eine Skizze zur Illustration nachfolgender Schritte des Herstellungsverfahrens;
- Fig, 5: einen Schnitt durch eine Materialbahn in einer Stufe des in Fig. 4 gezeigten Herstellungsverfahrens;
- Fig. 6: einen Teilschnitt durch eine aus der Materialbahn nach Fig. 5 hergestellte Ladekantenabdeckung in einer späteren Stufe des Verfahrens; und
- Fig. 7: einen vergrößerten Teilschnitt durch die fertige Ladekantenabdeckung.

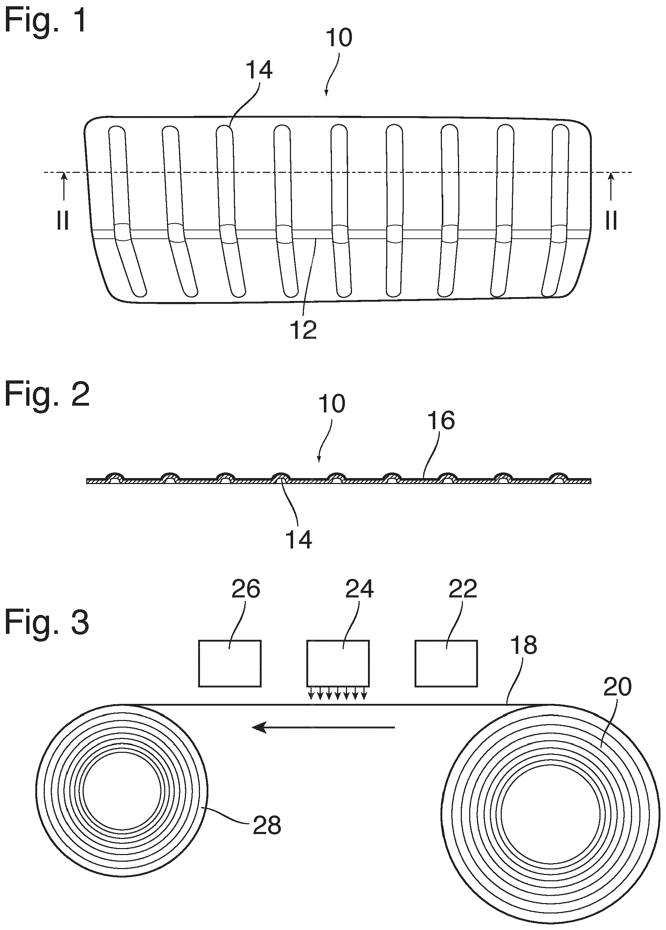

In Fig. 1 ist eine Ansicht einer Ladekantenabdeckung 10 gezeigt, die durch eine annähernd rechteckige, an einer Biegelinie 12 leicht abgewinkelte Platte aus Edelstahlblech gebildet wird. Im gezeigten Beispiel ist die Umrissform der Platte etwas asymmetrisch, da auf der Ladekante zwei zueinander spiegelbildliche Abdeckungen dieser Art angebracht werden. Das Edelstahlblech weist eine reliefartige Prägung 14 auf, die in diesem Beispiel durch erhabene, verrundete Schwellen gebildet wird, die parallel und in Abstand zueinander in der Richtung rechtwinklig zur Ladekante verlaufen.

Wie in der Schnittdarstellung in Fig. 2 zu erkennen ist, weist die Ladekantenabdeckung 10 an ihrer Oberseite eine Lackschicht 16 auf, die über das gesamte Relief der Prägung 14 hinweg eine einheitliche Dicke hat.

Erste Schritte eines Verfahrens zur Herstellung der in Fig. 1 und 2 gezeigten Ladekantenabdeckung sind in Fig. 3 illustriert. Eine endlose Materialbahn 18 eines Edelstahlbleches wird von einem Coil 20 abgezogen und durchläuft zunächst eine Vorbehandlungsstufe 22, in der die in Fig. 3 obere Oberfläche der Materialbahn gesäubert und ggf. mechanisch vorbehandelt wird. Anschließend durchläuft die Materialbahn eine Lackierstation 24, in der auf die Materialbahn die Lackschicht 16 aufgetragen wird, die beispielsweise aus einem UV-härtenden farblosen oder eingefärbten Strukturlack bestehen kann. Wahlweise kann der Lackierstation 24 noch eine Primer-Station vorgeschaltet sein, in der ein Primer auf die Materialbahn aufgetragen wird.

Der Lackierstation 24 nachgeschaltet ist eine Aushärtungsstation 26, in der die Lackschicht durch Bestrahlung mit ultravioletter Strahlung zum Aushärten gebracht wird.

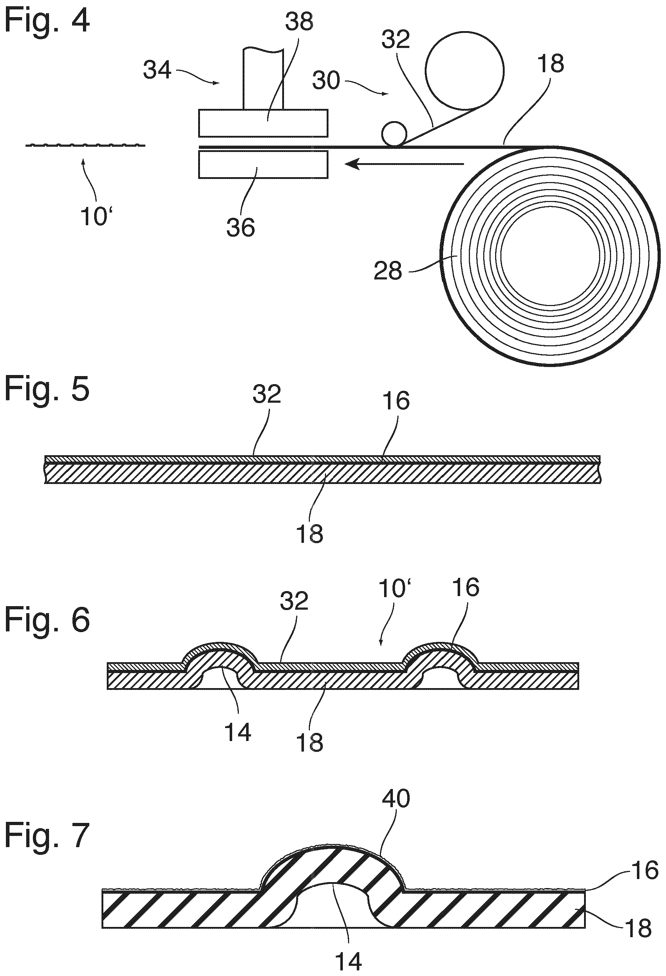

In diesem Beispiel wird die Materialbahn 18 nach dem Aushärten des Lackes wieder zu einem Coil 28 aufgewickelt, der dann zwischengelagert und/oder zu einer anderen Fertigungsstätte transportiert werden kann in der weitere Schritte des Herstellungsverfahrens ausgeführt werden. Diese weiteren Schritte des Herstellungsverfahrens sind schematisch in Fig. 4 dargestellt.

Die Materialbahn 18 wird vom Coil 28 abgezogen und einer Laminierstation 30 zugeführt, in der eine Schutzfolie 32, beispielsweise eine selbstklebende Kunststofffolie, auf die lackierte Oberfläche der Materialbahn 18 auflaminiert wird. Wahlweise kann die Materialbahn 18 vor oder nach dem Auflaminieren der Schutzfolie in einer nicht gezeigten Trennstation in mehrere parallele Bahnen aufgeteilt werden, die jeweils etwa die Breite einer einzelnen Ladekantenabdeckung 10 haben. Jede dieser Bahnen wird dann schrittweise zu einer Stanz- und Prägestation 34 transportiert, die ein stationäres Unterwerkzeug 36 und ein vertikalbewegliches Oberwerkzeug 38 aufweist. Bei jedem Halt der Materialbahn wird das Oberwerkzeug abgesenkt und gegen die auf dem Unterwerkzeug 36 abgestützte Materialbahn gepresst, wodurch eine Platte mit den Umrissen der Ladekantenabdeckung 10 aus dem Edelstahlblech ausgestanzt und reliefartig verformt wird. Wahlweise kann das Stanzen und Prägen auch in mehreren aufeinanderfolgenden Schritten erfolgen. Die Schutzfolie 32 wird beim Prägen gemeinsam mit dem Edelstahlblech verformt und schützt die Lackschicht 16 vor Beschädigungen, die durch unmittelbare Berührung mit dem Oberwerkzeug 38 entstehen könnten. Im Ergebnis erhält man so einzelne Ladekantenabdeckungen 10', die allerdings noch mit der Schutzfolie 32 versehen sind.

Fig. 5 zeigt die Materialbahn 18 mit der auflaminierten Schutzfolie 32 im Zustand vor Eintritt in die Stanz- und Prägestation 34.

Fig. 6 zeigt einen Teilschnitt durch eine Ladekantenabdeckung 10' in dem Zustand gemäß Fig. 4. Man erkennt, wie in den Schwellen der Prägung 14 sowohl die Lackschicht 16 als auch die Schutzfolie 32 der konvexen Form der Schwellen folgen.

In einem letzten Fertigungsschritt wird die Schutzfolie 32 abgezogen.

Fig. 7 zeigt einen vergrößerten Schnitt durch eine einzige Schwelle der Prägung 14 nach dem Abziehen der Schutzfolie. Durch den in dem Strukturlack verwendeten Härter wird die Oberfläche der Lackschicht 16 beim Aushärten so verformt, dass sich eine dreidimensionale (z.B. gewellte oder aufgerauhte) Oberflächenstruktur 40 ergibt.

## Patentansprüche

1. Verfahren zur Herstellung einer Ladekantenabdeckung (10) für einen Pkw-Kofferraum, in der Form einer reliefartig geprägten Platte aus Edelstahlblech, die an ihrer Oberfläche zumindest auf einer Seite eine Lackschicht (16) mit einheitlicher Dicke aufweist, **gekennzeichnet durch** die folgenden Schritte:
- abziehen einer endlosen Bahn (18) eines Edelstahlbleches von einem Coil (20),
- lackieren der Materialbahn,
- aushärten lassen des Lackes,
- auflaminieren einer Schutzfolie (32) auf die lackierte Seite des Edelstahlbleches,
- stanzen und prägen des Edelstahlbleches mit der auflaminierten Schutzfolie zur Bildung einzelner Ladekantenabdeckungen (10),
- abziehen der Schutzfolie (32).

2. Verfahren nach Anspruch 1, bei der die die Oberfläche der Lackschicht (16) bearbeitet wird, um eine dreidimensionale Oberflächenstruktur (14) zu erzeugen.

## Claims

1. A method for the production of a loading sill cover (10) for a passenger car trunk, in the form of a plate of stainless steel sheet embossed in relief, which has on its surface at least on one side a layer of varnish (16) of uniform thickness, **characterized by** the following steps:
- unwinding an endless web (18) of a stainless steel sheet from a coil (20),
- varnishing the material web,
- curing the varnish,
- laminating of a protective film (32) on the painted side of the stainless steel sheet,
- punching and embossing the stainless steel sheet with the laminated protective film to form individual loading sill covers (10),
- peeling-off the protective film (32).

2. The method of claim 1, wherein the surface of the varnish layer (16) is processed to produce a three-dimensional surface structure (14).

## Revendications

1. Procédé de fabrication d'un élément de recouvrement de bord de chargement (10) pour un coffre de voiture, ayant la forme d'une plaque matricée en relief en tôle d'acier inoxydable, dont un côté de sa surface comporte au moins une couche de vernis (16) d'épaisseur uniforme, **caractérisé par** les étapes suivantes consistant à :
- tirer une bande sans fin (18) d'une tôle d'acier inoxydable à partir d'une bobine (20),
- vernir la bande de matériau,
- laisser durcir le vernis,
- laminer un film de protection (32) sur le côté vernis de la tôle d'acier inoxydable,
- poinçonner et matricer la tôle d'acier inoxydable sur laquelle le film de protection a été laminé afin de former des éléments de recouvrement de bord de chargement (10) individuels,
- retirer le film de protection (32).

2. Procédé selon la revendication 1, dans lequel la surface de la couche de vernis (16) est traitée afin de produire une structure de surface tridimensionnelle (14).
